# EUROPEAN PATENT APPLICATION

(11) **EP 4 746 278 A1**
(43) Date of publication of application: **20.05.2026**
(21) Application number: 23945075.2
(22) Date of filing: 11.07.2023
(51) Int. Cl.: H02M 7/49, H02M 7/48

(54) **ELECTRIC POWER CONVERSION APPARATUS**

(71) Applicant: MITSUBISHI ELECTRIC CORPORATION, Chiyoda-ku Tokyo 100-8310 (JP)
(72) Inventor: KAJIYAMA, Takuya, Tokyo 100-8310 (JP); NAKAYAMA, Akito, Tokyo 100-8310 (JP); HIGAKI, Yusuke, Tokyo 100-8310 (JP); KONO, Yoshiyuki, Tokyo 100-8310 (JP)
(74) Representative: Witte, Weller & Partner Patentanwälte mbB
(86) International application number: PCT/JP2023/025556
(87) International publication number: WO 2025/013196

(57) **Abstract**

A power conversion device includes a power converter including a plurality of converter cells (1) connected in series. Each converter cell (1) includes a semiconductor circuit (25) including a plurality of first switching elements (22A, 22B) connected in series, a first power storage element (28) connected in parallel to the semiconductor circuit (25), and a discharge circuit (30A) connected in parallel to the first power storage element (28). The discharge circuit (30A) includes a plurality of discharge units (50A to 50C) connected in series. The discharge unit (50A) includes a first discharge resistor (31A), a second discharge resistor (32A), and a second switching element (33A). The first discharge resistor (31A) is connected in parallel to a first series body including the second discharge resistor (32A) and the second switching element (33A) connected in series.

## Description

### TECHNICAL FIELD

The present disclosure relates to a power conversion device.

### BACKGROUND ART

In recent years, a modular multilevel converter (MMC) has been known as a high-voltage and large-capacity power conversion device applied to a high-voltage system such as a power system. The MMC is constituted by arms including a plurality of cascade-connected unit converters called converter cells. Since the MMC has advantages such as high scalability and fewer harmonics, the MMC is widely applied to an alternating current (AC) - direct current (DC) converter, a reactive power compensation device (STATCOM: Static Synchronous Compensator), and the like applied to high-voltage DC power transmission (HVDC: High Voltage Direct Current).

Each converter cell includes a power storage element (for example, a capacitor), and it is necessary to discharge the capacitor included in the converter cell after a converter is stopped. In this regard, PTL 1 (Japanese Patent No. 6869625) discloses a power conversion device. A discharge circuit of the power conversion device includes a switch connected in parallel to a capacitor to close a circuit and discharge the capacitor when a power converter is stopped, a discharge resistor connected in series to the switch, and a drive circuit to open the switch when a state in which the power converter is stopped is canceled.

### CITATION LIST

### PATENT LITERATURE

PTL 1: Japanese Patent No. 6869625

### SUMMARY OF INVENTION

### TECHNICAL PROBLEM

The power conversion device according to PTL 1 considers quickly discharging the capacitor of a unit converter when the power converter is stopped, with the configuration described above. However, in the MMC used for the HVDC or the like, the capacitor of the converter cell has a high voltage (for example, several kV), which may increase the size of a switch such as a semiconductor element used in a corresponding discharge circuit.

An object in an aspect of the present disclosure is to provide a power conversion device capable of quickly discharging a power storage element of a converter cell when a power converter is stopped, without increasing the size of the converter cell.

### SOLUTION TO PROBLEM

A power conversion device according to an embodiment includes a power converter including a plurality of converter cells connected in series. Each of the converter cells includes a semiconductor circuit including a plurality of first switching elements connected in series, a first power storage element connected in parallel to the semiconductor circuit, and a discharge circuit connected in parallel to the first power storage element. The discharge circuit includes a plurality of discharge units connected in series. The discharge unit includes a first discharge resistor, a second discharge resistor, and a second switching element. The first discharge resistor is connected in parallel to a first series body including the second discharge resistor and the second switching element connected in series.

A power conversion device according to another embodiment includes a power converter including a plurality of converter cells connected in series. Each of the converter cells includes a semiconductor circuit including a plurality of first switching elements connected in series, a power storage unit including a plurality of power storage elements, the power storage unit being connected in parallel to the semiconductor circuit, and a discharge circuit connected in parallel to the power storage unit. The discharge circuit includes a plurality of discharge units connected in series. Each of the plurality of discharge units is connected in parallel to the power storage element corresponding thereto. The discharge unit includes a first discharge resistor, a second discharge resistor, and a second switching element. The first discharge resistor is connected in parallel to a first series body including the second discharge resistor and the second switching element connected in series.

### ADVANTAGEOUS EFFECTS OF INVENTION

According to the present disclosure, it is possible to quickly discharge a power storage element of a converter cell when a power converter is stopped, without increasing the size of the converter cell.

### BRIEF DESCRIPTION OF DRAWINGS

Fig. 1 is a diagram showing an exemplary configuration of a power conversion device.
Fig. 2 is a diagram showing exemplary configurations of a converter cell according to a first embodiment.
Fig. 3 is a block diagram showing an example of a hardware configuration of a control device.
Fig. 4 is a diagram showing an exemplary configuration 1 of a discharge circuit.
Fig. 5 is a diagram showing an exemplary configuration 2 of the discharge circuit.
Fig. 6 is a diagram showing an exemplary configuration 3 of the discharge circuit.
Fig. 7 is a diagram showing an exemplary configuration of a converter cell 1X according to a second embodiment.

### DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

### First Embodiment.

### <Overall Configuration>

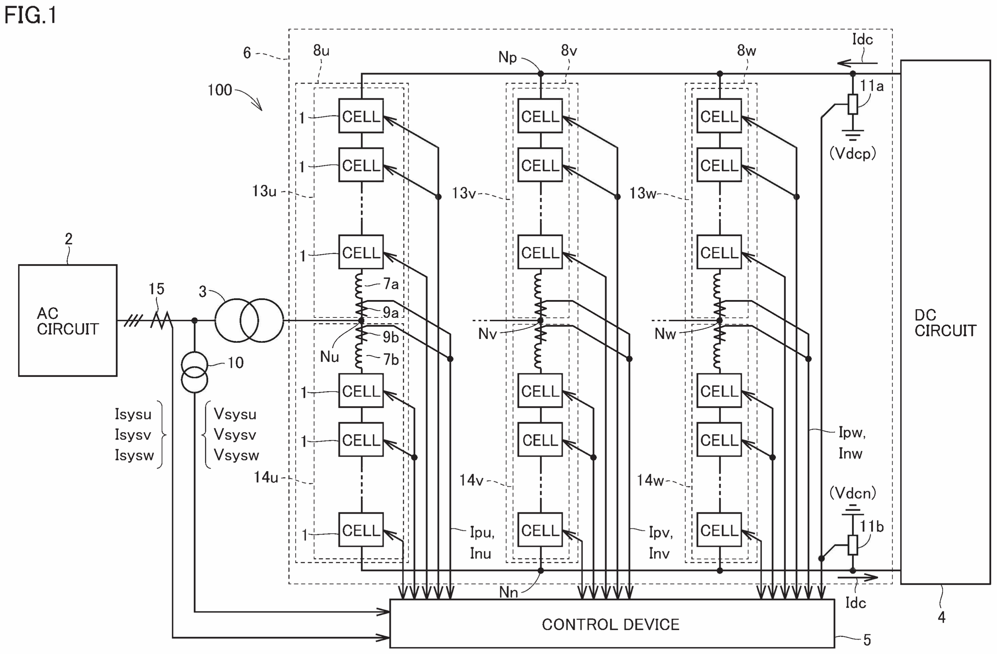

Fig. 1 is a diagram showing an exemplary configuration of a power conversion device 100. Referring to Fig. 1, power conversion device 100 is connected between an AC circuit 2 and a DC circuit 4. DC circuit 4 is, for example, a DC terminal of a DC power system including a DC power transmission network or the like, or of another power conversion device. DC circuit 4 may have a configuration including a power storage device connected to a DC terminal of a power converter 6. The power storage device includes, for example, an electric double layer capacitor, or a storage battery such as a lithium ion battery.

Power conversion device 100 includes self-commutated power converter 6, and a control device 5 to control power converter 6. Typically, power converter 6 is constituted by a modular multilevel converter including a plurality of converter cells (corresponding to "cells" in Fig. 1) 1 connected in series to each other. A "converter cell" is also referred to as a "sub module" or a "unit converter".

Power converter 6 is a power converter that is connected to DC circuit 4 and performs power conversion between DC circuit 4 and AC circuit 2. Specifically, power converter 6 converts DC power outputted from DC circuit 4 into AC power, and outputs the AC power to AC circuit 2 via a transformer 3. Further, power converter 6 converts AC power from AC circuit 2 into DC power, and outputs the DC power to DC circuit 4.

In the example in Fig. 1, power converter 6 includes a plurality of arms for each phase of AC circuit 2. Specifically, power converter 6 includes a plurality of leg circuits 8u, 8v, and 8w (hereinafter described as a "leg circuit 8" when they are collectively referred to or any one of them is referred to) connected in parallel to each other between a positive electrode DC terminal (that is, a high potential-side DC terminal) Np and a negative electrode DC terminal (that is, a low potential-side DC terminal) Nn.

Leg circuit 8 is provided for each of a plurality of phases constituting an alternating current. Leg circuit 8 is connected between AC circuit 2 and DC circuit 4, and performs power conversion between the both circuits. Fig. 1 shows a case where AC circuit 2 is a three-phase AC system, and three leg circuits 8u, 8v, and 8w are provided corresponding to a U phase, a V phase, and a W phase, respectively.

AC terminals Nu, Nv, and Nw provided to leg circuits 8u, 8v, and 8w, respectively, are connected to AC circuit 2 via transformer 3. AC circuit 2 is, for example, a three-phase AC power system including an AC power source and the like. In Fig. 1, for ease of illustration, connection between AC terminal Nv, Nw and transformer 3 is not shown. The DC terminals (that is, positive electrode DC terminal Np and negative electrode DC terminal Nn) provided in common to leg circuits 8 are connected to DC circuit 4.

Leg circuits 8u, 8v, and 8w may be configured to be connected to AC circuit 2 via an interconnection reactor, instead of using transformer 3 in Fig. 1. Furthermore, leg circuits 8u, 8v, and 8w may be respectively provided with primary windings instead of AC terminals Nu, Nv, and Nw, and leg circuits 8u, 8v, and 8w may be AC-connected to transformer 3 or the interconnection reactor via secondary windings magnetically coupled to the primary windings. In this case, the primary windings may be reactors 7a and 7b described below. That is, leg circuits 8 are electrically (that is, DC- or AC-) connected to AC circuit 2 via connection portions provided to leg circuits 8u, 8v, and 8w, such as AC terminals Nu, Nv, and Nw or the primary windings described above.

Leg circuit 8u includes a positive-side arm 13u extending from positive electrode DC terminal Np to AC terminal Nu, and a negative-side arm 14u extending from negative electrode DC terminal Nn to AC terminal Nu. A connection point between positive-side arm 13u and negative-side arm 14u is connected, as AC terminal Nu, with transformer 3. Positive electrode DC terminal Np and negative electrode DC terminal Nn are connected to DC circuit 4. Leg circuit 8v includes a positive-side arm 13v and a negative-side arm 14v, and leg circuit 8w includes a positive-side arm 13w and a negative-side arm 14w. Since leg circuits 8v and 8w have the same configuration as that of leg circuit 8u, leg circuit 8u will be described below as a representative.

In leg circuit 8u, positive-side arm 13u includes a plurality of converter cells 1 cascade-connected to each other, and reactor 7a. The plurality of converter cells 1 and reactor 7a are connected in series to each other. Negative-side arm 14u includes a plurality of converter cells 1 cascade-connected to each other, and reactor 7b. The plurality of converter cells 1 and reactor 7b are connected in series to each other.

Reactor 7a may be inserted at any position in positive-side arm 13u, and reactor 7b may be inserted at any position in negative-side arm 14u. A plurality of reactors 7a and a plurality of reactors 7b may be provided. The reactors may have inductance values different from each other. Furthermore, only reactor 7a in positive-side arm 13u or only reactor 7b in negative-side arm 14u may be provided.

Power conversion device 100 further includes an AC voltage detector 10, an AC current detector 15, DC voltage detectors 11a and 11b, and arm current detectors 9a and 9b provided to each leg circuit 8. These detectors each measure an electrical quantity (that is, a current or a voltage) used to control power converter 6. Signals detected by these detectors are inputted to control device 5.

AC voltage detector 10 detects three-phase AC voltages Vsysu, Vsysv, and Vsysw (hereinafter also collectively referred to as an "AC voltage Vsys"). AC current detector 15 three-phase AC currents Isysu, Isysv, and Isysw (hereinafter also collectively referred to as an "AC current Isys") of AC circuit 2. DC voltage detector 11a detects a DC voltage Vdcp of positive electrode DC terminal Np connected to DC circuit 4. DC voltage detector 11b detects a DC voltage Vdcn of negative electrode DC terminal Nn connected to DC circuit 4.

Arm current detectors 9a and 9b provided to leg circuit 8u for the u phase detect a positive-side arm current Iup flowing to positive-side arm 13u and a negative-side arm current Iun flowing to negative-side arm 14u, respectively. Arm current detectors 9a and 9b provided to leg circuit 8v for the v phase detect a positive-side arm current Ivp and a negative-side arm current Ivn, respectively. Arm current detectors 9a and 9b provided to leg circuit 8w for the w phase detect a positive-side arm current Iwp and a negative-side arm current Iwn, respectively.

It should be noted that power converter 6 may be constituted by a delta-connected MMC. A delta-connected cascaded three-phase MMC has a configuration in which arms including a plurality of cascade-connected cells and a reactor connected in series are delta-connected.

### <Configuration of Converter Cell>

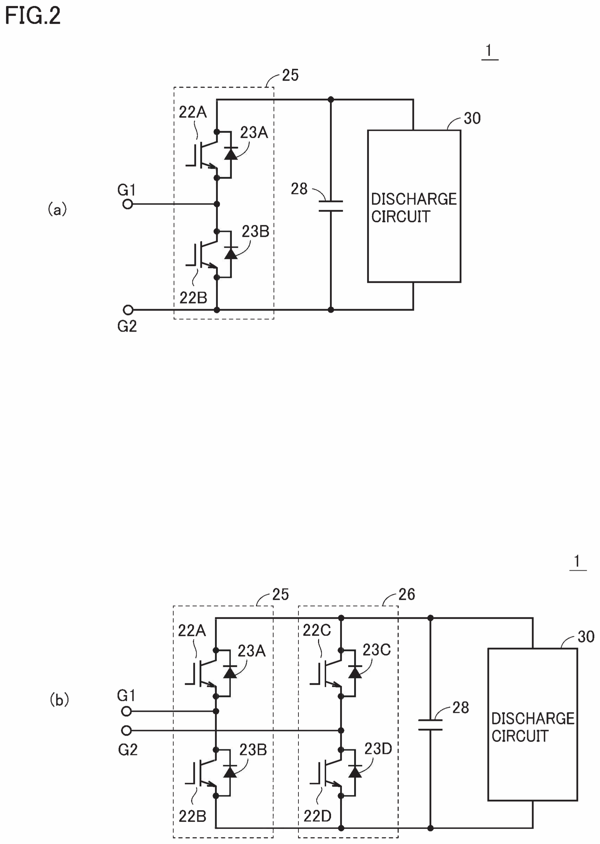

Fig. 2 is a diagram showing exemplary configurations of converter cell 1 according to a first embodiment. Converter cell 1 shown in Fig. 2(a) has a circuit configuration called a half-bridge configuration.

Referring to Fig. 2(a), converter cell 1 includes a semiconductor circuit 25, a capacitor 28 as a power storage element, and a discharge circuit 30. Semiconductor circuit 25, capacitor 28, and discharge circuit 30 are connected in parallel.

Semiconductor circuit 25 includes two switching elements 22A and 22B connected in series, and diodes 23A and 23B. Diodes 23A and 23B are connected in anti-parallel (that is, in parallel and in a direction of reverse bias) to switching elements 22A and 22B, respectively. Capacitor 28 is connected in parallel to semiconductor circuit 25, and holds a DC voltage. A voltage Vc across capacitor 28 is detected by a voltage detector included in converter cell 1. Detected voltage Vc is inputted to control device 5.

A connection node between switching elements 22A and 22B is connected with an input/output terminal G1 on a high potential side. A connection node between switching element 22B and capacitor 28 is connected with an input/output terminal G2 on a low potential side.

When switching element 22A is turned on and switching element 22B is turned off, voltage Vc of capacitor 28 is outputted between input/output terminals G1 and G2. When switching element 22A is turned off and switching element 22B is turned on, a zero voltage is outputted between input/output terminals G1 and G2.

Converter cell 1 shown in Fig. 2(b) has a circuit configuration called a full-bridge configuration. Referring to Fig. 2(b), converter cell 1 includes semiconductor circuits 25 and 26, capacitor 28, and discharge circuit 30. Semiconductor circuit 25, semiconductor circuit 26, capacitor 28, and discharge circuit 30 are connected in parallel.

Semiconductor circuit 26 includes two switching elements 22C and 22D connected in series, and diodes 23C and 23D. Diodes 23C and 23D are connected in anti-parallel to switching elements 22C and 22D, respectively. The connection node between switching elements 22A and 22B is connected with input/output terminal G1 on the high potential side, and a connection node between switching elements 22C and 22D is connected with input/output terminal G2 on the low potential side.

By turning on switching element 22D, turning off switching element 22C, and alternately setting switching elements 22A and 22B to an ON state, a positive voltage or a zero voltage is outputted between input/output terminals G1 and G2. Further, by turning off switching element 22D, turning on switching element 22C, and alternately setting switching elements 22A and 22B to the ON state, a zero voltage or a negative voltage is outputted between input/output terminals G1 and G2.

As each of switching elements 22A to 22D in Fig. 2(a) and Fig. 2(b), a self-turn-off switching element capable of controlling both an ON operation and an OFF operation is used. Switching elements 22A to 22D are each a self-turn-off semiconductor switching element such as an insulated gate bipolar transistor (IGBT) or a metal oxide semiconductor field-effect transistor (MOSFET). Further, in Fig. 2(a) and Fig. 2(b), a film capacitor or the like is mainly used as capacitor 28.

Discharge circuit 30 in Fig. 2(a) and Fig. 2(b) is connected in parallel to capacitor 28, and is provided to discharge energy of capacitor 28. A specific configuration of discharge circuit 30 will be described later.

Further, the following describes, as an example, a case where converter cell 1 has the configuration of a half-bridge cell shown in Fig. 2(a). However, converter cell 1 may have the full-bridge configuration shown in Fig. 2(b).

### <Hardware Configuration of Control Device>

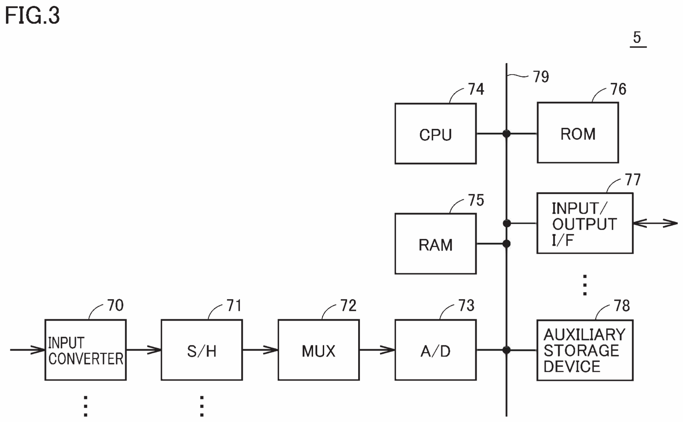

Fig. 3 is a block diagram showing an example of a hardware configuration of control device 5. Control device 5 in the case of Fig. 3 is constituted based on a computer. Referring to Fig. 3, control device 5 includes one or more input converters 70, one or more sample hold (S/H) circuits 71, a multiplexer (MUX) 72, and an A/D converter 73. Furthermore, control device 5 includes one or more central processing units (CPUs) 74, a random access memory (RAM) 75, and a read only memory (ROM) 76. Furthermore, control device 5 includes one or more input/output interfaces 77, an auxiliary storage device 78, and a bus 79 that mutually connects the components described above.

Input converter 70 includes an auxiliary transformer for each input channel. Each auxiliary transformer converts a detection signal detected by each detector in Fig. 1 into a signal having a voltage level suitable for subsequent signal processing.

Sample hold circuit 71 is provided for each input converter 70. Sample hold circuit 71 samples a signal indicating an electrical quantity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels, by providing a plurality of A/D converters 73.

CPU 74 controls entire control device 5, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electrical quantity detection values, and the like.

Input/output interface 77 is an interface circuit in communicating between CPU 74 and an external device.

It should be noted that at least a part of control device 5 may be constituted using a circuit such as a field programmable gate array (FPGA) and an application specific integrated circuit (ASIC). Alternatively, at least a part of control device 5 can also be constituted by an analog circuit.

### <Configuration of Discharge Circuit>

### (Exemplary Configuration 1)

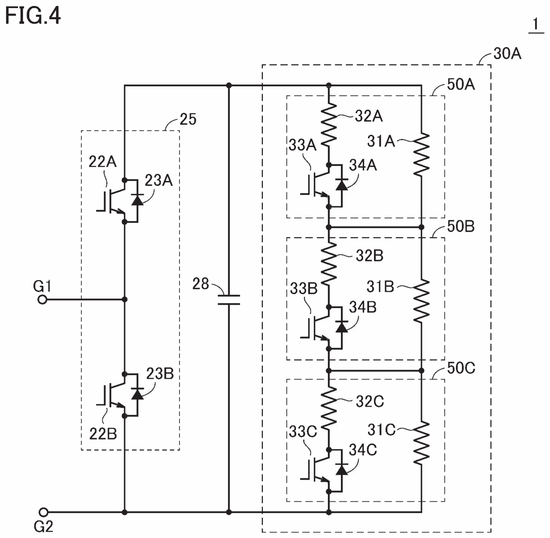

Fig. 4 is a diagram showing an exemplary configuration 1 of the discharge circuit. While a discharge circuit 30A shown in Fig. 4 corresponds to discharge circuit 30 shown in Fig. 2(a), a symbol "A" is added thereto for convenience, in order to distinguish it from other exemplary configurations of the discharge circuit. The same applies to exemplary configurations 2 and 3 described below.

Referring to Fig. 4, discharge circuit 30A includes a plurality of discharge units 50A to 50C (hereinafter also collectively referred to as a "discharge unit 50") connected in series. Although the number of discharge units 50 is three in the example in Fig. 4, it is only necessary that two or more discharge units 50 are provided.

Discharge unit 50A includes discharge resistors 31A and 32A, a switching element 33A, and a diode 34A. Similarly, discharge unit 50B includes discharge resistors 31B and 32B, a switching element 33B, and a diode 34B. Discharge unit 50C includes discharge resistors 31C and 32C, a switching element 33C, and a diode 34C.

Hereinafter, discharge resistors 31A to 31C are also collectively referred to as a "discharge resistor 31", discharge resistors 32A to 32C are also collectively referred to as a "discharge resistor 32", switching elements 33A to 33C are also collectively referred to as a "switching element 33", and diodes 34A to 34C are also collectively referred to as a "diode 34".

Discharge resistors 31A to 31C are the same resistors, and a resistance value thereof is "R1". Discharge resistors 32A to 32C are the same resistors, and a resistance value thereof is "R2". Typically, resistance value R2 is set to be less than or equal to resistance value R1. A rated voltage of switching element 33 is smaller than a rated voltage of switching elements 22A and 22B. It should be noted that discharge circuit 30A may have a configuration not including diodes 34A to 34C connected in anti-parallel to switching elements 33A to 33C.

In each discharge unit 50, discharge resistor 31 is connected in parallel to a series body including discharge resistor 32 and switching element 33 connected in series. Specifically, discharge resistor 31 is connected between a positive-side terminal and a negative-side terminal of discharge unit 50. Further, the series body including discharge resistor 32 and switching element 33 is connected between the positive-side terminal and the negative-side terminal of discharge unit 50.

When switching elements 33A to 33C are in an OFF state in discharge circuit 30A, a current flows through only discharge resistors 31A to 31C. In this case, voltages applied to switching elements 33A to 33C are equal to voltages applied to discharge resistors 31A to 31C, respectively. That is, voltages obtained by dividing voltage Vc of capacitor 28 by discharge resistors 31 of discharge units 50 are applied to switching elements 33. An equivalent resistance value of discharge unit 50 when switching element 33 is in the OFF state is resistance value R1.

When switching elements 33A to 33C are in an ON state in discharge circuit 30A, the current is divided by discharge resistor 31 and discharge resistor 32. A current flowing through switching element 33 is equal to a current flowing through discharge resistor 32. An equivalent resistance value of discharge unit 50 when switching element 33 is in the ON state is a combined resistance value R12 of resistance value R1 and resistance value R2 (that is, R12 = R1×R2/(R1+R2)). It should be noted that resistance value R1 is larger than combined resistance value R12.

From the above description, it is understood that an equivalent resistance value of discharge circuit 30 when switching elements 33A to 33C are in the OFF state (that is, resistance value R1) is larger than an equivalent resistance value of discharge circuit 30 when switching elements 33A to 33C are in the ON state (that is, combined resistance value R12).

When power converter 6 is in a stop state, control device 5 controls switching elements 33A to 33C of discharge circuit 30A to be in the ON state. Thereby, the equivalent resistance value of discharge circuit 30A decreases, and thus discharge of capacitor 28 by discharge circuit 30A can be promoted while power converter 6 is stopped. Further, by setting resistance value R2 of discharge resistor 32A to be less than or equal to resistance value R1 of discharge resistor 31A, the equivalent resistance value of discharge circuit 30A can further decrease, and thus discharge of capacitor 28 is further promoted.

On the other hand, when power converter 6 is in an operation state, control device 5 controls switching elements 33A to 33C of discharge circuit 30A to be in the OFF state. Thereby, the equivalent resistance value of discharge circuit 30 increases, and thus a loss caused in discharge circuit 30A while power converter 6 is operated can be reduced.

For example, control device 5 determines that power converter 6 is in the operation state when it receives a command to operate power converter 6 from a higher-level device, and determines that power converter 6 is in the stop state when it receives a command to stop power converter 6 from the higher-level device.

With the configuration described above, by providing the plurality of discharge units 50 to discharge circuit 30A, the voltages obtained by dividing voltage Vc of the capacitor by discharge resistors 31 are applied to switching elements 33. Accordingly, even when capacitor 28 of converter cell 1 has a large voltage as in the MMC, it is not necessary to use a large-sized switching element having a high withstand voltage performance in discharge circuit 30A. That is, an element having a small rated voltage, a small size, and a low loss can be used as switching element 33 of discharge circuit 30A. As a result, the size and weight of converter cell 1 can be reduced.

Further, when power converter 6 is in the stop state, capacitor 28 of converter cell 1 can be quickly discharged by decreasing the equivalent resistance value of discharge circuit 30A. On the other hand, when power converter 6 is in the operation state, the loss caused in discharge circuit 30A can be reduced by increasing the equivalent resistance value of discharge circuit 30A.

### (Exemplary Configuration 2)

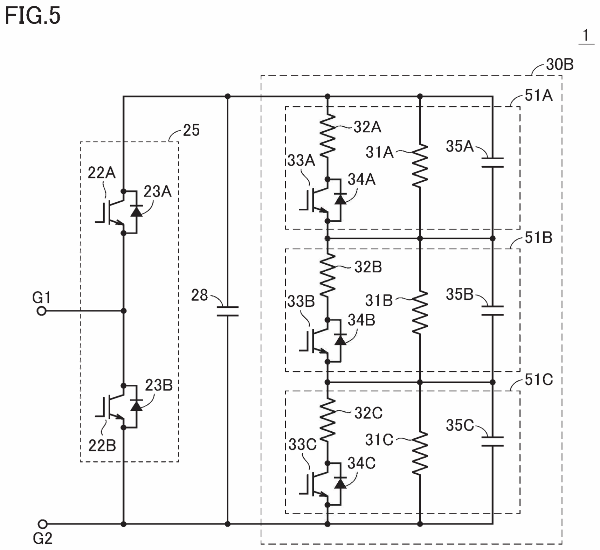

Fig. 5 is a diagram showing an exemplary configuration 2 of the discharge circuit. Referring to Fig. 5, a discharge circuit 30B includes a plurality of discharge units 51A to 51C (hereinafter also collectively referred to as a "discharge unit 51") connected in series. It should be noted that, although the number of discharge units 51 is three in the example in Fig. 5, it is only necessary that two or more discharge units 51 are provided.

Discharge unit 51A has a configuration obtained by adding a capacitor 35A to discharge unit 50A in Fig. 4. Specifically, capacitor 35A is connected in parallel to discharge resistor 31A and a series body including discharge resistor 32A and switching element 33A. Similarly, discharge units 51B and 51C include capacitors 35B and 35C, respectively. Capacitors 35A to 35C (hereinafter also collectively referred to as a "capacitor 35") are the same capacitors. An electrostatic capacitance of capacitor 35 is smaller than an electrostatic capacitance of capacitor 28. Further, a rated voltage of capacitor 35 is smaller than a rated voltage of capacitor 28.

Here, an advantage of providing capacitors 35 to discharge circuit 30B will be described. Generally, a parasitic capacitance is included in a switching element, which is a semiconductor element, and thus a certain switching transition time (for example, a time from when a gate driver is turned on to when the switching element is actually turned on) exists in switching.

Even in a configuration in which capacitors 35 are not provided as in discharge circuit 30A in Fig. 4, when a variation in switching timings of a plurality of switching elements 33 (for example, a time difference between a switching timing of one switching element 33 and a switching timing of another switching element 33) is sufficiently small, a voltage is not unevenly applied to some of switching elements 33. Accordingly, in the configuration of discharge circuit 30A, it is preferable that the variation in switching timings of the plurality of switching elements 33 is smaller than a switching transition time of each switching element 33.

However, there may be a case where the variation in switching timings increases. Here, it is assumed that this variation increases and, for example, of three switching elements 33, only one switching element 33 (for example, switching element 33A) is in the OFF state, and the remaining switching elements 33 (for example, switching elements 33B and 33C) are in the ON state.

In this case, equivalent resistance values of discharge unit 50B including switching element 33B and discharge unit 50C including switching element 33C are combined resistance value R12, and an equivalent resistance value of discharge unit 50A including switching element 33A is resistance value R1. Since resistance value R1 is larger than combined resistance value R12, a voltage of discharge unit 50A is larger than voltages of discharge units 50B and 50C. If the voltage of discharge unit 50A on this occasion exceeds a withstand voltage of switching element 33, switching element 33 may fail.

Thus, by providing capacitors 35A to 35C to discharge units 51A to 51C, respectively, as in discharge circuit 30B shown in Fig. 5, it is possible to prevent transient voltage concentration due to the variation in switching timings. It should be noted that the electrostatic capacitance and the rated voltage of capacitor 35 may be smaller than the electrostatic capacitance and the rated voltage of capacitor 28, respectively. Accordingly, a small-sized and inexpensive capacitor can be used as capacitor 35.

It should be noted that, although the example in Fig. 5 has described a configuration in which capacitors 35 are provided to all discharge units 51, the present disclosure is not limited to the configuration. For example, capacitor 35 may be provided to at least one discharge unit 51 of the plurality of discharge units 51.

### (Exemplary Configuration 3)

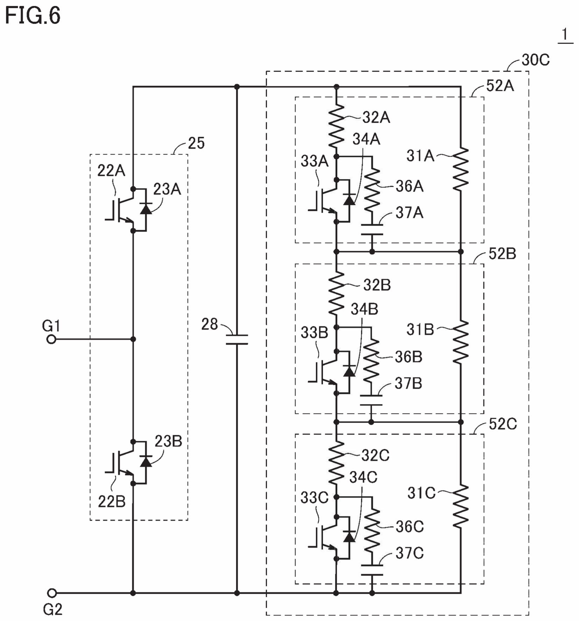

Fig. 6 is a diagram showing an exemplary configuration 3 of the discharge circuit. Referring to Fig. 6, a discharge circuit 30C includes a plurality of discharge units 52A to 52C (hereinafter also collectively referred to as a "discharge unit 52") connected in series. It should be noted that, although the number of discharge units 52 is three in the example in Fig. 6, it is only necessary that two or more discharge units 52 are provided.

Discharge unit 52A has a configuration obtained by adding a series body including a resistor 36A and a capacitor 37A connected in series, to discharge unit 50A in Fig. 4. Specifically, the series body is connected in parallel to switching element 33A. The series body corresponds to an RC snubber circuit. Similarly, discharge unit 52B has a series body including a resistor 36B and a capacitor 37B connected in series. Discharge unit 52C has a series body including a resistor 36C and a capacitor 37C connected in series.

Resistors 36A to 36C (hereinafter also collectively referred to as a "resistor 36") are the same resistors. Capacitors 37A to 37C (hereinafter also collectively referred to as a "capacitor 37") are the same capacitors. An electrostatic capacitance of capacitor 37 is smaller than the electrostatic capacitance of capacitor 28. Further, a rated voltage of capacitor 37 is smaller than the rated voltage of capacitor 28.

Discharge circuit 30C shown in Fig. 6 has an advantage similar to that of discharge circuit 30B shown in Fig. 5. It should be noted that, although the example in Fig. 6 has described a configuration in which RC snubber circuits are provided to all discharge units 52, the present disclosure is not limited to the configuration. For example, an RC snubber circuit may be provided to at least one discharge unit 52 of the plurality of discharge units 52. Furthermore, in the example in Fig. 6, an RC snubber circuit including resistor 36 and capacitor 37 connected in series is connected in parallel to switching element 33. However, a C snubber circuit including only capacitor 37 may be connected in parallel to switching element 33.

### <Modification of Control Scheme>

The above description has described a configuration in which switching elements 33A to 33C are controlled to be in the ON state when power converter 6 is in the stop state, and switching elements 33A to 33C are controlled to be in the OFF state when power converter 6 is in the operation state.

However, when power converter 6 is in the operation state, the ON/OFF states of switching elements 33A to 33C may be controlled based on conditions as described below.

When power converter 6 is in the operation state and voltage Vc of capacitor 28 is more than or equal to a threshold value Th1, control device 5 controls each switching element 33 of discharge circuit 30 to be in the ON state. On the other hand, when power converter 6 is in the operation state and voltage Vc is less than a threshold value Th2, control device 5 controls each switching element 33 of discharge circuit 30 to be in the OFF state. It should be noted that threshold value Th1 is set to be larger than threshold value Th2.

Thereby, when voltage Vc of capacitor 28 becomes more than or equal to threshold value Th1, discharge of capacitor 28 is promoted, and thus an overvoltage of capacitor 28 can be prevented. On the other hand, when voltage Vc becomes less than threshold value Th2, discharge of capacitor 28 is suppressed, and thus a loss caused in discharge circuit 30 can be reduced.

In another aspect, control device 5 controls the ON/OFF state of each switching element 33, based on a deviation between an average value of voltages Vc of all capacitors 28 included in the plurality of converter cells 1 in an arm (for example, any of positive-side arms 13u to 13w and negative-side arms 14u to 14w) (hereinafter referred to as a capacitor voltage average value Vav) and voltage Vc in each converter cell 1 of the arm.

In this regard, control device 5 includes an average value calculator to calculate capacitor voltage average value Vav corresponding to each arm. Control device 5 includes a deviation calculator to calculate, for each of the plurality of converter cells 1 in the arm, a deviation ΔV obtained by subtracting capacitor voltage average value Vav from voltage Vc in that converter cell 1 (for example, ΔV = Vc-Vav).

Then, when power converter 6 is in the operation state and deviation ΔV corresponding to one converter cell 1 is more than or equal to a threshold value Th3, control device 5 controls switching element 33 corresponding to that converter cell 1 to be in the ON state. When power converter 6 is in the operation state and deviation ΔV corresponding to one converter cell 1 is less than a threshold value Th4, control device 5 controls switching element 33 corresponding to that converter cell 1 to be in the OFF state. It should be noted that, threshold value Th3 is set to be larger than threshold value Th4.

Thereby, when voltage Vc in converter cell 1 is larger than capacitor voltage average value Vav in the arm to which that converter cell 1 belongs by more than or equal to an expected value (for example, in the case of ΔV ≥ Th3), discharge of capacitor 28 is promoted, and thus voltage Vc can be decreased. On the other hand, when a difference between voltage Vc and capacitor voltage average value Vav decreases (for example, in the case of ΔV < Th4), discharge of capacitor 28 is suppressed. Thereby, a variation in voltage Vc in the arm can be suppressed.

### Second Embodiment.

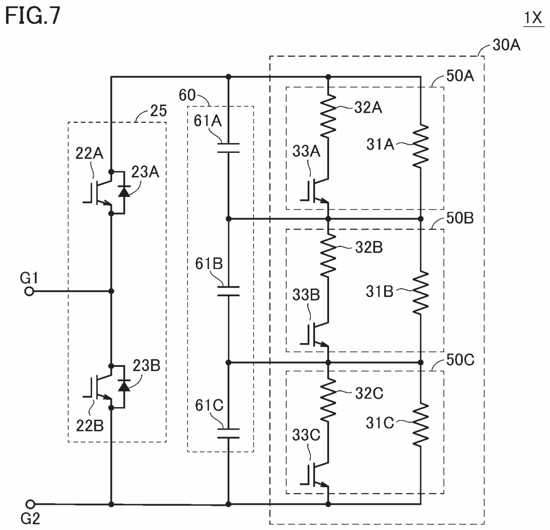

Fig. 7 is a diagram showing an exemplary configuration of a converter cell 1X according to a second embodiment. Referring to Fig. 7, converter cell 1X has a configuration obtained by replacing capacitor 28 in converter cell 1 in Fig. 4 with a power storage unit 60. Power storage unit 60 includes three capacitors 61A to 61C (hereinafter also collectively referred to as a "capacitor 61") connected in series.

Each of the plurality of discharge units 50 is connected in parallel to corresponding capacitor 61. Specifically, discharge unit 50A is connected in parallel to capacitor 61A, discharge unit 50B is connected in parallel to capacitor 61B, and discharge unit 50C is connected in parallel to capacitor 61C.

With the configuration described above, in converter cell 1X according to the second embodiment, an advantage similar to those of exemplary configuration 2 shown in Fig. 5 and exemplary configuration 3 shown in Fig. 6 is obtained. Specifically, by providing capacitors 61A to 61C connected in parallel to discharge units 50A to 50C, respectively, it is possible to prevent transient voltage concentration due to the variation in switching timings. Furthermore, in converter cell 1X, the number of components can be reduced, as compared with exemplary configuration 2 and exemplary configuration 3. It should be noted that the scheme for controlling switching element 33 by control device 5 is the same as that in the first embodiment.

### Other Embodiments

(1) In the first embodiment described above, exemplary configuration 2 and exemplary configuration 3 may be combined. For example, capacitor 35 of discharge circuit 30B shown in Fig. 5 may be further provided to discharge circuit 30C shown in Fig. 6.
(2) Although each of the embodiments described above has described a configuration in which a normally-off semiconductor switching element such as an IGBT is used as switching element 33, the present disclosure is not limited to the configuration. For example, a configuration in which a normally-on semiconductor switching element such as a junction field effect transistor (JFET) is used as switching element 33 may be adopted. With such a configuration, since the JFET can always pass a current without receiving power supply, discharge of capacitor 28 can be promoted even in case of a loss of power.
(3) The configuration exemplified as each of the embodiments described above is an exemplary configuration of the present disclosure, and can be combined with another known technique, or can be configured as being modified, for example, partially omitted, without departing from the gist of the present disclosure. Further, in each of the embodiments described above, the processing and the configuration described in another embodiment may be adopted and performed as appropriate.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

1, 1X: converter cell; 2: AC circuit; 3: transformer; 4: DC circuit; 5: control device; 6: power converter; 7a, 7b: reactor; 8u, 8v, 8w: leg circuit; 9a, 9b: arm current detector; 10: AC voltage detector; 11a, 11b: DC voltage detector; 13u to 13w: positive-side arms; 14u to 14w: negative-side arms; 15: AC current detector; 22A to 22D, 33A to 33C: switching elements; 23A to 23D, 34A to 34C: diodes; 25, 26: semiconductor circuit; 28, 35A to 35C, 37A to 37C, 61A to 61C: capacitors; 30, 30A to 30C: discharge circuits; 31A to 31C, 32A to 32C: discharge resistors; 36A to 36C: resistors; 50A to 50C, 51A to 51C, 52A to 52C: discharge units; 60: power storage unit; 70: input converter; 71: sample hold circuit; 72: multiplexer; 73: A/D converter; 74: CPU; 75: RAM; 76: ROM; 77: input/output interface; 78: auxiliary storage device; 79: bus; 100: power conversion device.

## Claims

1. A power conversion device comprising:
a power converter including a plurality of converter cells connected in series, wherein
each of the converter cells includes
a semiconductor circuit including a plurality of first switching elements connected in series,
a first power storage element connected in parallel to the semiconductor circuit, and
a discharge circuit connected in parallel to the first power storage element,
the discharge circuit includes a plurality of discharge units connected in series,
the discharge unit includes a first discharge resistor, a second discharge resistor, and a second switching element, and
the first discharge resistor is connected in parallel to a first series body including the second discharge resistor and the second switching element connected in series.

2. The power conversion device according to claim 1, wherein a rated voltage of the second switching element is smaller than a rated voltage of the first switching element.

3. The power conversion device according to claim 1 or 2, wherein a resistance value of the second discharge resistor is less than or equal to a resistance value of the first discharge resistor.

4. The power conversion device according to any one of claims 1 to 3, wherein at least one discharge unit of the plurality of discharge units further includes a second power storage element connected in parallel to the first discharge resistor.

5. The power conversion device according to claim 4, wherein
an electrostatic capacitance of the second power storage element is smaller than an electrostatic capacitance of the first power storage element, and
a rated voltage of the second power storage element is smaller than a rated voltage of the first power storage element.

6. The power conversion device according to any one of claims 1 to 5, wherein at least one discharge unit of the plurality of discharge units further includes a third power storage element connected in parallel to the second switching element.

7. The power conversion device according to any one of claims 1 to 5, wherein
at least one discharge unit of the plurality of discharge units further includes a second series body including a third power storage element and a resistor connected in series, and
the second series body is connected in parallel to the second switching element.

8. The power conversion device according to claim 6 or 7, wherein
an electrostatic capacitance of the third power storage element is smaller than an electrostatic capacitance of the first power storage element, and
a rated voltage of the third power storage element is smaller than a rated voltage of the first power storage element.

9. The power conversion device according to any one of claims 1 to 8, wherein a variation in switching timings of a plurality of the second switching elements included in the plurality of discharge units is smaller than a switching transition time of the second switching element in each of the plurality of discharge units.

10. The power conversion device according to any one of claims 1 to 9, wherein
when the power converter is in an operation state, the second switching element is controlled to be in an OFF state, and
when the power converter is in a stop state, the second switching element is controlled to be in an ON state.

11. The power conversion device according to any one of claims 1 to 9, wherein
when the power converter is in a stop state, the second switching element is controlled to be in an ON state,
when the power converter is in an operation state and a voltage of the first power storage element is more than or equal to a first threshold value, the second switching element is controlled to be in the ON state,
when the power converter is in the operation state and the voltage of the first power storage element is less than a second threshold value, the second switching element is controlled to be in an OFF state, and
the first threshold value is larger than the second threshold value.

12. The power conversion device according to any one of claims 1 to 9, wherein
the power converter includes a plurality of arms,
each of the plurality of arms includes two or more converter cells,
the power conversion device further comprises:
an average value calculator to calculate an average value of voltages of all the first power storage elements included in the two or more converter cells in the arm; and
a deviation calculator to calculate, for each of the two or more converter cells in the arm, a deviation between a voltage of the first power storage element and the average value,
when the power converter is in a stop state, the second switching element is controlled to be in an ON state,
when the power converter is in an operation state and the deviation corresponding to one converter cell is more than or equal to a third threshold value, the second switching element corresponding to the one converter cell is controlled to be in the ON state,
when the power converter is in the operation state and the deviation corresponding to the one converter cell is less than a fourth threshold value, the second switching element corresponding to the one converter cell is controlled to be in an OFF state, and
the third threshold value is larger than the fourth threshold value.

13. The power conversion device according to any one of claims 1 to 12, wherein the second switching element is a normally-on semiconductor element.

14. A power conversion device comprising:
a power converter including a plurality of converter cells connected in series, wherein
each of the converter cells includes
a semiconductor circuit including a plurality of first switching elements connected in series,
a power storage unit including a plurality of power storage elements, the power storage unit being connected in parallel to the semiconductor circuit, and
a discharge circuit connected in parallel to the power storage unit,
the discharge circuit includes a plurality of discharge units connected in series,
each of the plurality of discharge units is connected in parallel to the power storage element corresponding thereto,
the discharge unit includes a first discharge resistor, a second discharge resistor, and a second switching element, and
the first discharge resistor is connected in parallel to a first series body including the second discharge resistor and the second switching element connected in series.
